# EUROPEAN PATENT APPLICATION

(11) **EP 1 635 523 A1**
(43) Date of publication of application: **15.03.2006**
(21) Application number: 04021707.7
(22) Date of filing: 13.09.2004
(51) Int. Cl.: H04L 12/58

(54) **Alert for interactive users of msn messenger**

(71) Applicant: TOPSEED TECHNOLOGY CORP., Chung Ho City, Taipei Hsien, Taiwan 235 (TW)
(72) Inventor: Chen, Shoei-Lai, Taipei, Taiwan 237 (TW)
(74) Representative: TER MEER - STEINMEISTER & PARTNER GbR

(57) **Abstract**

A method and a device for alerting MSN message transmission are provided. An alert software is activated immediately after the user activates and logs in the MSN real-time messenger. The software then performs the confirmation of on-line status, and enters the computer system into a standby mode for alert. When an incoming message is acquired from the messenger, the alert level of the incoming message is determined. A signal representing the alert level of the incoming message is then transmitted to a wireless network access point, such that an alert showing the alert level of the incoming message can be generated. It will be appreciated that the incoming message does not only include an actual message sent by another on-line party, but also includes a call from another party.

## Description

### BACKGROUND OF THE INVENTION

The present invention relates in general to an alert for interactive users of MSN messenger, and more particularly, to a real-time alert for an activated MSN messenger platform, so as to automatically categorize the incoming message or call by the other on-line party. Therefore, the user who is not in front of the computer can also determine the level of importance of the incoming message and the calling party.

The MSN messenger is currently one of the most popular real-time communication software that does not only allow user to communicate by sound or texts, but also provides communication and/or message transmission between two or multiple parties. Apart from the basic Internet service fee, no additional charge is required for MSN messenger, and this is why it has become one of the most popular communication softwares currently.

Currently, two-way or multiple-party message transmission provided by the MSN messenger is limited to sound and texts. Upon activation and logon to MSN messenger, the user can select the party that he/she wants to communicate by inputting the specific account number. The user can also receive the message transmitted by others. The message communication by MSN messenger is presented to the user by display, keyboard, microphone, speaker or earphone. Therefore, the user has to stay in front of a computer system to effectively execute MSN messenger. Once the user is remote from the computer or unavailable to check the display of the computer, he/she may not be aware that there is an incoming message or other users are currently on line. Although the MSN messenger may typically generate an alert tone such as "ding" or "dong", it is only a short single-tone alert that is very often easily missed by the user. Further, such single-tone alert does not provide any information to identify the category of the incoming message or party who has just logged on. Therefore, once receiving the single-tone alert, the user cannot determine whether the message or the log-on party requires to be relied immediately.

### BRIEF SUMMARY OF THE INVENTION

Therefore, a method for alerting MSN message transmission is provided. An alert software is activated immediately after the user activates and logs in the MSN real-time messenger. The software then performs the confirmation of on-line status, and enters the computer system into a standby mode for alert. When an incoming message is acquired from the messenger, the alert level of the incoming message is determined. A signal representing the alert level of the incoming message is then transmitted to a wireless network access point, such that an alert showing the alert level of the incoming message can be generated. It will be appreciated that the incoming message does not only include an actual message sent by another on-line party, but also includes a call from another party.

Accordingly, the method for alerting MSN message transmission includes the steps of activating MSN real-time messenger and logging in the messenger; activating an alert software; confirming on-line status and entering a standby mode for alert; acquiring information of an incoming message from the messenger; determining alert level of the incoming message; transmitting a signal representing the alert level of the incoming message to a wireless network access point; and generating an alert showing the alert level of the incoming message.

The alerting method of present invention further includes a step of setting up the alert level in response to the incoming message.

The alerting method of present invention further includes entering a configuring mode and performing re-confirmation when an on-line status is not confirmed.

The alerting method of present invention further includes an enquiry step after every predetermined period of time for acquiring an incoming message.

The alerting method of present invention further includes entering an MSN confirmation mode when the determining step exceeds a predetermined time period, and displaying determination failure.

Moreover, a device for alerting MSN message transmission is also provided. The device includes a wireless network access point, a computer system connected to the wireless network access point via a connection port, an alert unit installed at the wireless network access point, and a software electrically connected to a MSN messenger platform.

Accordingly, the alert device for MSN messenger includes a wireless network access point; a computer system connected to the wireless network access point via a connection port; an alert unit installed at the wireless network access point; and a software electrically connected to a MSN messenger platform.

The alert unit of the present alter device further includes a visual alert device operative to generate light with various colors in response to the incoming message.

The alert unit of the present alter device further includes an audio alert device operative to generate various sounds in response to the incoming message.

The software of the present alter device is operative to activate alert function immediately when the MSN messenger is activated

### BRIEF DESCRIPTION OF THE DRAWINGS

The above objects and advantages of the present invention will be become more apparent by describing in detail exemplary embodiments thereof with reference to the attached drawings in which:
Figure 1 shows a computer system provided with an alert device for MSN messenger;
Figure 2 is a block diagram showing the alert device; and
Figure 3 is a flow chart showing a method for generating an alert for an incoming message or a call from another party.

### DETAILED DESCRIPTION OF THE INVENTION

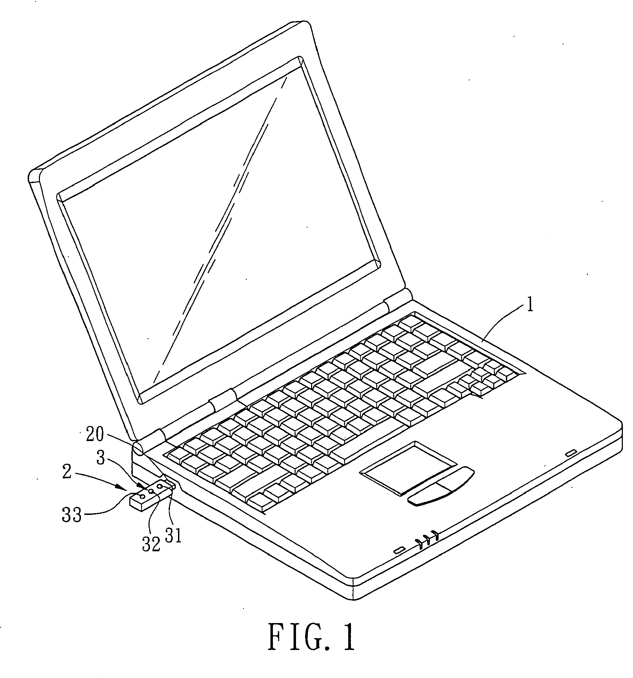

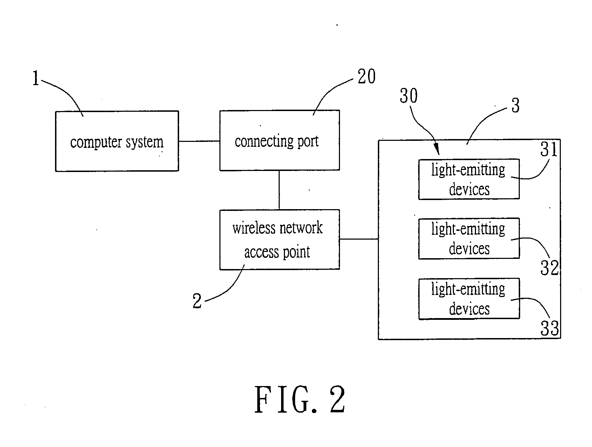

Referring to Figures 1 and 2, an embodiment of an MSN messenger alert device is shown. The device has a computer system 1, a wireless access point 2, an alert unit 3 and a software program controlling and connected the MSN messenger.

The computer system 1 as shown in Figure 1 includes a portable computer system. It will be appreciated that the alert device can also be applied to desktop or other forms of computers, or an electronic device equipped with MSN real-time communication system. The computer system 1 is connected to a network such as a local network or the Internet.

The wireless network access point 2 is connected to the computer system 1 via a connecting port 20, which includes a USB port in this embodiment.

The alert unit 3 is directly mounted and connected to the wireless network access point 2. The alert unit 3 is connected to the software program loaded in the computer system 1. The alert unit 1 may be a visual alert unit that has one or more than one light-emitting devices 30. Preferably, three light-emitting devices 31, 32 and 33 operative to generate three different colors are installed in the visual alert unit 3. Thereby, according to the color of light generated by the alert unit 3, the user can determines the importance or priority of the incoming message or the parties that have called or transmit message thereto. For example, the green color light generated by the light-emitting device 31 may indicate that an incoming message is received. The red color light generated by the light-emitting device 32 may indicate that an unknown party that has called or sent a message to the user. The yellow color light generated by the light-emitting device 33 may indicate that a known or expected party is on-line or has sent a message thereto. The colors and numbers of light-emitting device 30 may vary according to the specific requirements of each user.

In addition to the visual alert unit, other types of alert devices such as audio alert unit can also be used. That is, a phonic IC or memory device may be formed to electrically connect the wireless network access point 2. Via the software program loaded to the computer system 1, various sounds such as "you have a message" or "your friend calls" can be generated for alerting the user. Thereby, the user can determine how such message is to be handled or responded.

The above is an embodiment of a device to provide a user an alert of receiving an incoming message or being called by another party. A method for alerting the user of an incoming message or call by another party is also provided as follows.

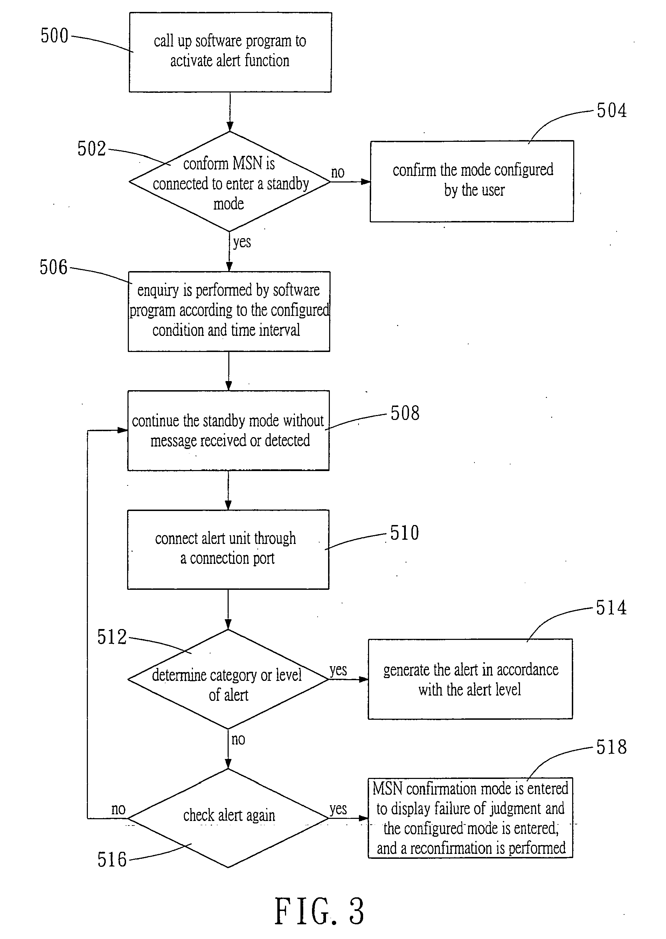

Figure 3 shows a flow chart of a method for alerting the user of an incoming message or a call from another party when the user has loaded the software program as described above into the computer system 1.

When the computer system 1 is switched on, and the software program is loaded thereto, the MSN real-time communication program is activated by inputting the user identification and password. The software program is also called up to activate the alert function in step 500. When the software program is activated, a step of conforming whether MSN is connected is performed to enter a standby mode in step 502. If no occurrence of error is confirmed, a step for confirming the mode configured by the user is performed in step 504. When the on-line status is confirmed and the stand-by mode is entered, an enquiry is performed by the software program in step 506 according to the configured condition and time interval. When there is no message received or detected, the standby mode is continued in step 508. If the enquiry result shows that a message or notice is received, the alert unit is connected through the connection port 20 in step 510. When the connection is confirmed, the software program also determines the category or levels of alert of the detected or received MSN message in step 512. A signal is then transmitted to the alert unit 3 installed at the wireless network access point 2, so as to generate the alert in accordance with the alert level in step 514. For example, a light or sound in a specific format that indicates the specific status of the MSN messenger is generated. When there is no alert required, a next check is performed in step 516. For overtime judgment, the MSN confirmation mode is entered to display failure of judgment and the configured mode is entered, and a reconfirmation is performed in step 518.

While the present invention has been particularly shown and described with reference to preferred embodiments thereof, it will be understood by those of ordinary skill in the art the various changes in form and details may be made therein without departing from the spirit and scope of the present invention as defined by the appended claims.

## Claims

1. A method for alerting MSN message transmission, comprising:
activating MSN real-time messenger and logging in the messenger-,
activating an alert software;
confirming on-line status and entering a standby mode for alert;
acquiring information of an incoming message from the messenger;
determining alert level of the incoming message;
transmitting a signal representing the alert level of the incoming message to a wireless network access point; and
generating an alert showing the alert level of the incoming message.

2. The method of Claim 1, wherein the alert software and the MSN real-time messenger are activated simultaneously.

3. The method of Claim 1, further comprising generating a unique color light as the alert for representing the alert level as determined.

4. The method of Claim 1, further comprising generating a unique sound as the alert for representing the alert level as determined.

5. The method of Claim 1, wherein the alert level is determined according to the type of incoming message and a party from which the incoming message is sent.

6. The method of Claim 1, further comprising a step of setting up the alert level in response to the incoming message.

7. The method of Claim 1, further comprising entering a configuring mode and performing re-confirmation when an on-line status is not confirmed.

8. The method of Claim 1, further comprising an enquiry step after every predetermined period of time for acquiring an incoming message.

9. The method of Claim 1, further comprising entering an MSN confirmation mode when the determining step exceeds a predetermined time period, and displaying determination failure.

10. An alert device for MSN messenger, comprising:
a wireless network access point;
a computer system connected to the wireless network access point via a connection port;
an alert unit installed at the wireless network access point; and
a software electrically connected to a MSN messenger platform.

11. The device of Claim 10, wherein the alert unit comprises a light generating device.

12. The device of Claim 10, wherein the alert unit comprises a visual alert device operative to generate light with various colors in response to the incoming message.

13. The device of Claim 10, wherein the alert unit comprises a phonic device.

14. The device of Claim 10, wherein the alert unit comprises an audio alert device operative to generate various sounds in response to the incoming message.

15. The device of Claim 10, wherein the alert unit comprises a plurality of sound generating devices.

16. The device of Claim 10, wherein the software is operative to activate alert function immediately when the MSN messenger is activated.
